# EUROPEAN PATENT APPLICATION

(11) **EP 1 793 066 A1**
(43) Date of publication of application: **06.06.2007**
(21) Application number: 05380264.1
(22) Date of filing: 05.12.2005
(51) Int. Cl.: E04H 5/02, F03D 1/00, F03D 11/04

(54) **Building that acts as base for a pole**

(71) Applicant: Prefabricados Uniblok, S.A., 45223 Sesena (Toledo) (ES); Knock Telecom S.A., 45223 Seseña, Toledo (ES)
(72) Inventor: Sabas Fernandez, Jose Luis, 48140 Igorre (Vizcaya) (ES); Zautua Bilbao, Igor, 48140 Igorre (Vizcaya) (ES); Ormazabal Echevarria, Alejandro, 45223 Seseña (Toledo) (ES)
(74) Representative: Carpintero Lopez, Francisco

(57) **Abstract**

The building consists of a body (4) with a roof (14), which comprises a plurality of equipment housed therein and at least one base (2), so that the base (2) serves to support at least one pole (3).

## Description

### OBJECT OF THE INVENTION

The present invention relates to a building that has at least one base, which forms part of said building, for anchoring at least one pole to support electrical cables or cables from a wind-driven generator, from a telecommunications or radio aerial, so that the building may house equipment for an electrical transformer substation and/or system control centre or for a communications centre. This equipment is responsible for processing the signal or suchlike that enters through the pole, so that the equipment situated in the pole and outside the building form a complete system.

### BACKGROUND OF THE INVENTION

One way to distribute electric power is by means of high-voltage overhead lines, which helps to reduce power loss. These overhead lines are held up by poles consisting of structures made from metal, reinforced concrete or other materials, almost all of which must have concrete foundations to help counteract stresses caused by compression, traction and buckling due to the weight of the materials that they support, the traction of the conductors and the action of the wind on these, thus preventing the pole from falling.

Within the electric power distribution network, the cables are brought down said poles at the branch points for the connection of transformer substations and/or system control centres, which are then responsible for distributing low-voltage electric power to the different consumers at said distribution points and/or make it possible to carry out operating procedures on the distribution line. The electrical transformer substation and/or system control centre are designed to house switchgear such as transformers, medium-voltage cells that contain electrical and electronic equipment used in installations for electric power distribution for the control and/or protection of the electricity network, low-voltage switchboards that, once the power has been transformed to the low-voltage range, allows the electric power to be distributed to the different consumers using control and/or protection equipment, etc. Depending on where they are situated, these substations can be above ground, semi-underground or underground, with the difference that underground substations have a less visual impact on their surroundings and do not occupy space in an urban environment.

Transformer substations and/or system control centres generally consist of a suitably sized building or body that can either be a civil engineering or prefabricated structure, made from concrete and other materials, wherein the plurality of electrical and electronic equipment that forms the substation's electrical installation (transformer, medium-voltage cells, low-voltage switchboard, etc.) is installed.

Electrical transformer substations and/or system control centres are usually situated a certain distance from the poles that support the overhead electric power lines from which the connection cables are brought down, which means that the connection cables normally pass from the foot of the pole to the electrical transformer substations and/or system control centres under the ground. This makes it necessary to use greater lengths of cable for the connection, the need to dig up the ground in order to bury said cables, etc. It also means that in addition to having to use longer cables and the possibility of these suffering power wastage, there is also a risk of a fault occurring in said section as a result of work carried out by others.

Furthermore, the disadvantage of installing the electricity poles that supply the electrical transformer substations and/or system control centres separately is that it is necessary to construct foundations for the pole, which raises the costs in terms of materials, machinery, labour, deployment of the engineers needed to construct said foundations and the need to expropriate more than one plot of land, one for the excavations to bury the building of the electrical transformer substation and/or system control centre and the other for the excavations to construct the foundations for the pole. In turn, mounting said supply pole for the electrical transformer substation and/or system control centre separately involves the need to install an earthing for said pole that is independent from that of the electrical transformer substation and/or system control centre.

In other applications such as telecommunications centres, due to the problem of providing coverage in urban environments, streetlamps and suchlike are used as poles for telecommunications aerials, and the other equipment that forms part of the telecommunications centre is usually installed in outdoor cabinets, which is a disadvantage when it comes to installing mobile telecommunications base stations due to their visual impact. Moreover, this kind of installation usually requires a perimeter fence to prevent vandalism and it also involves the cost of renting the space in which it is located. In addition to the above is the problem that said installations require an electrical connection, which is difficult to obtain in places where access is difficult such as, for example, in the mountains.

### DESCRIPTION OF THE INVENTION

The building that is the object of the present invention is a structure built above ground, semi-underground or underground, which is either a civil engineering or prefabricated (panelled or monoblock) structure, made from concrete and other materials, comprising at least one base or foundation for anchoring at least one pole for supporting the electrical cables of one or more lines, supporting a wind-driven generator, supporting a telecommunications or radio aerial or supporting photovoltaic panels, so that said building may house electrical and electronic equipment, telecommunications equipment or generator sets therein.

A multi-functional building is thereby obtained, which in turn acts as a base or foundation that is able to counteract stresses caused by compression, traction and buckling due to the weight of the materials that the poles support, traction of the conductors and the action of the wind on these, thus preventing the poles from falling. Also, by bringing the cables down directly from the pole to the building through a tube that is either mounted outside or inside the pole and base, it is possible to reduce both the length of the cables used between the pole and the building and power wastage therefrom, avoiding the need to expropriate more than one plot of land for the excavations, the need to dig trenches through which to pass the underground connection cables and the need to install an independent earthing network, as the same earthing network may be used for both the pole and the building, thus definitively reducing the corresponding installation costs.

Specifically, the invention relates to a building or structure that acts as base for a pole, consisting of a body with a roof, which can either be part of the body or independent therefrom, the building comprising a plurality of equipment housed therein. According to the invention, the building further comprises at least one base or foundation (which can either form part of the building or can be fixed thereto, so that the building and the base form a mechanical assembly), so that said at least one pole is anchored to the building by fastening means (for example, directly to the base), which means that the base serves as support for said at least one pole.

The building can either be underground (i.e. buried or largely buried under the ground), semi-underground or above ground (i.e. situated above ground level).

The base may incorporated into or housed in, for example, a wall (or more than one wall) or in a floor or on the roof of the building.

The building may further comprise said at least one pole, in which case the pole may be joined to the body of the building (for example, directly to the base). The pole may, for example, consist of a turret for an overhead electric cable line or a support for a wind-driven generator.

The building may comprise said at least one pole, and the cables may be connected directly from said at least one pole to the building through a tube outside the pole or through a tube inside the pole and base.

The building may consist of an electrical transformer substation and/or system control centre, so that the building houses electrical and electronic equipment therein.

Alternatively, said at least one pole may consist of a support for a telecommunications and/or radio aerial. The building may consist of a telecommunications centre, so that it houses telecommunications equipment therein.

The pole or poles may have one or more photovoltaic panels for supplying the equipment installed inside the building.

The building may comprise an inner wall that creates a partition between a compartment for housing the electrical and/or electronic equipment or telecommunications equipment and an area for housing said at least one pole.

The building may comprise at least one system for anchoring the pole to the base, said anchoring system comprising:
- a plurality of bolts;
- a plurality of angled elements embedded in the base;
- an opening in the base into which to fit the pole; or - a plate embedded in the base to ensure a flat contact surface.

The foot of the pole may be fixed to said bolts, fitted into the opening in the base, fixed to the plate embedded in said base, fixed to the angled elements, etc.

The building may have at least one ventilation tower and/or at least one ventilation box and/or at least one ventilation grille. To be more specific, in the case of an underground building, for example, the roof may have at least one ventilation tower for letting air in and out, and/or the building may have at least one ventilation box, in at least one of the walls or the roof of the body, whilst in the case of an above ground or semi-underground building, air could be let in through at least one grille at the foot of one or more of the side walls or doors of the building, establishing a peripheral upper air outlet between the side walls of the building and the ceiling or roof thereof, or by means of one or more grilles positioned at the top of one or more of the side walls of the building or on the ceiling thereof.

The building may have an access door.

### DESCRIPTION OF THE FIGURES

To complement the description being made and with the object of aiding towards a better understanding of the characteristics of the invention, in accordance with a preferred example of embodiment thereof, a set of drawings is attached as an integral part of said description, wherein the following has been represented, with an illustrative, non-limiting character:

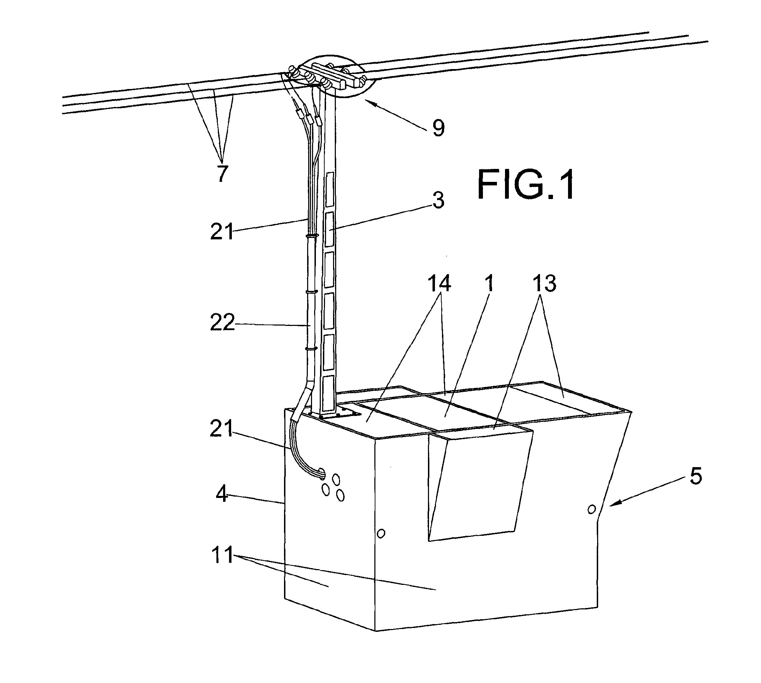

Figure 1.- Shows a perspective view of the underground building (5) with horizontal ventilation by means of boxes (13) according to a preferred embodiment of the invention, with the pole (3) for electrical cables (9) of the line (7) supported on the body (4).

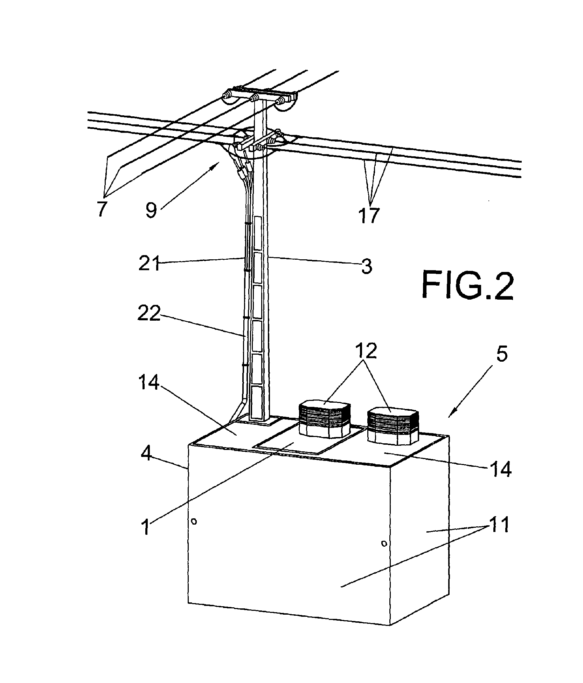

Figure 2.- Shows a perspective view of the underground building (5) with vertical ventilation by means of ventilation towers (12) according to a preferred embodiment of the invention, with the pole (3) for electrical cables (9) of the lines (7, 17) supported on the body (4).

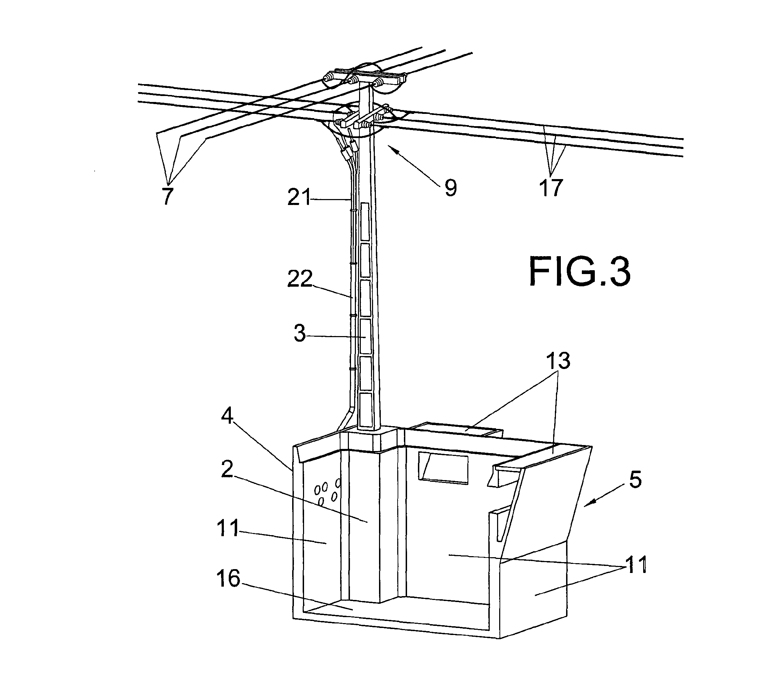

Figure 3.- Shows a vertical cross-section view of the underground building (5) with horizontal ventilation by means of boxes (13) according to a preferred embodiment of the invention. It shows the base (2) (which forms part of the body (4)) on which the pole (3) for the electrical cables (9) of the lines (7, 17) is supported.

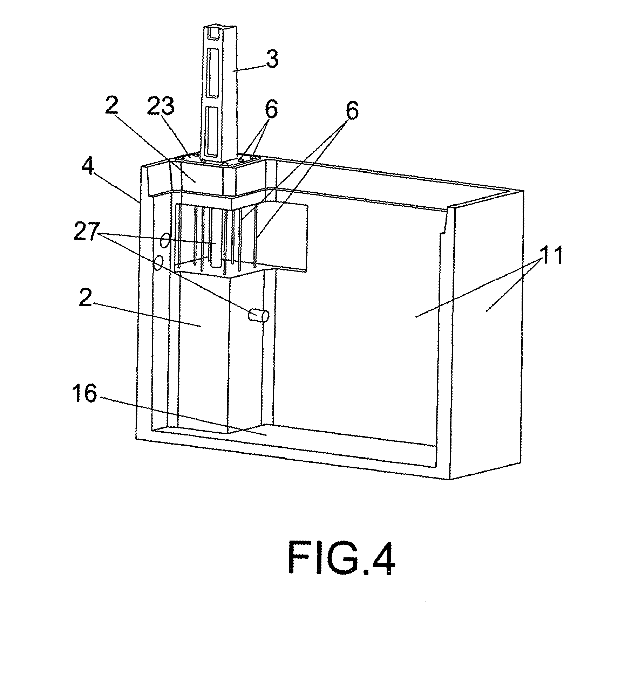

Figure 4.- Shows a detail of figure 3, which illustrates an embodiment of the manner in which the pole (3) is anchored to the base (2) by means of bolts (6) embedded in the base (2).

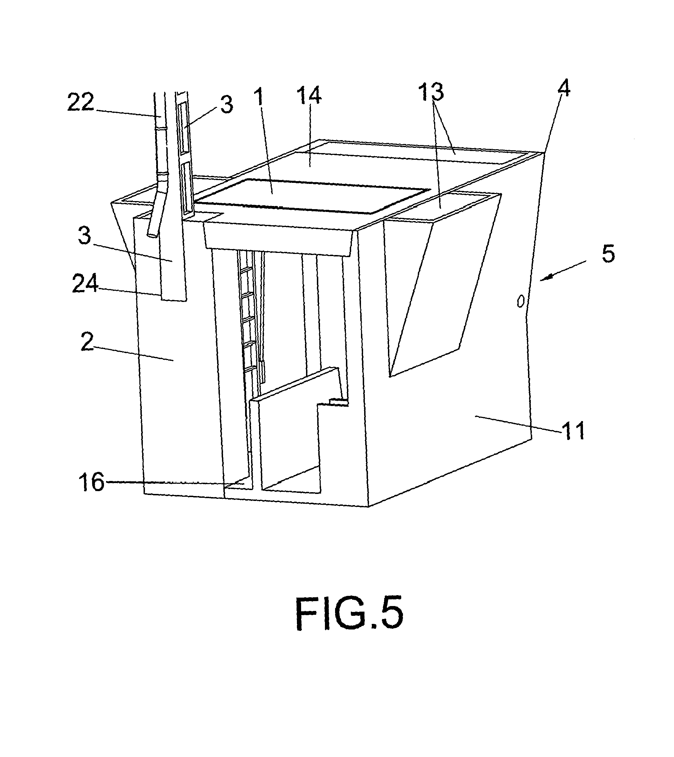

Figure 5.- Shows a vertical cross-section view of the underground building (5) with horizontal ventilation by means of boxes (13), which illustrates an embodiment of the manner in which the pole (3) is anchored to the base (2) by fitting the pole (3) into the opening (24) designed for this purpose in the base (2).

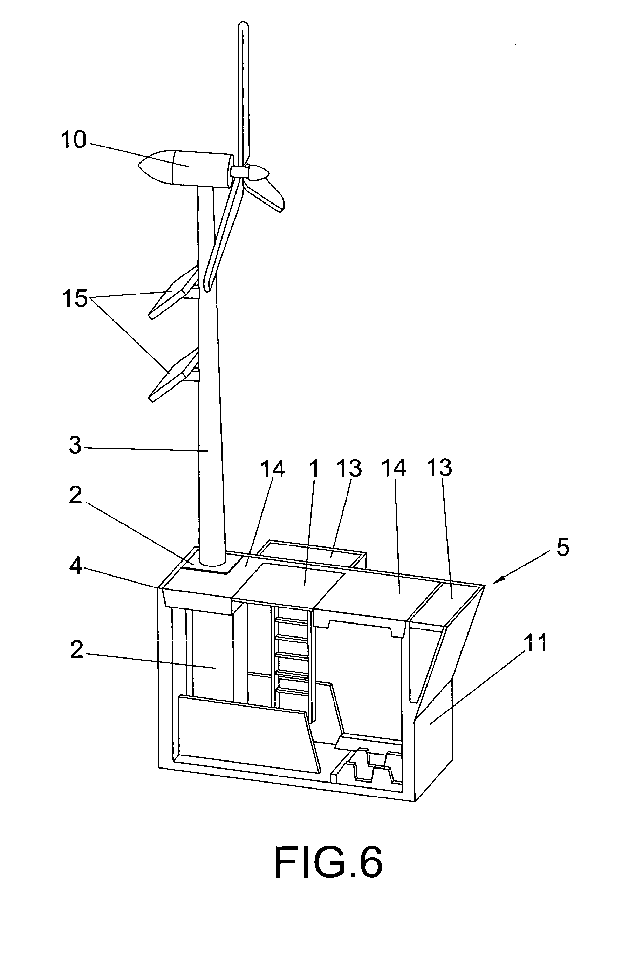

Figure 6.- Shows a vertical cross-section view of the underground building (5) with horizontal ventilation by means of boxes (13) according to an alternative embodiment of the invention, which illustrates how the pole (3) for a wind-driven generator (10) is supported on the body (4) of the building (5). The pole holds two solar panels (15).

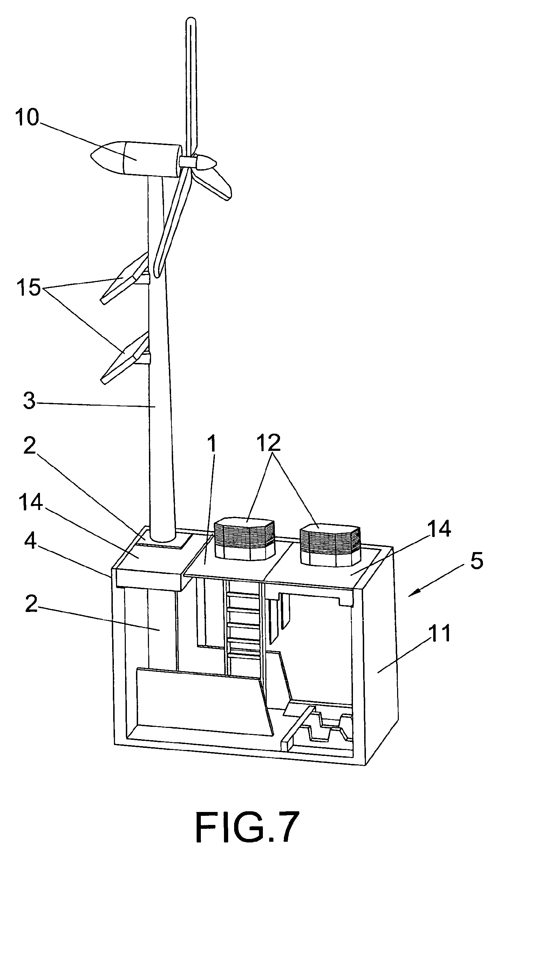

Figure 7.- Shows a vertical cross-section view of the underground building (5) with vertical ventilation by means of ventilation towers (12) according to an alternative embodiment of the invention, which illustrates how the pole (3) for a wind-driven generator (10) is supported on the body (4) of the building (5). The pole holds two solar panels (15).

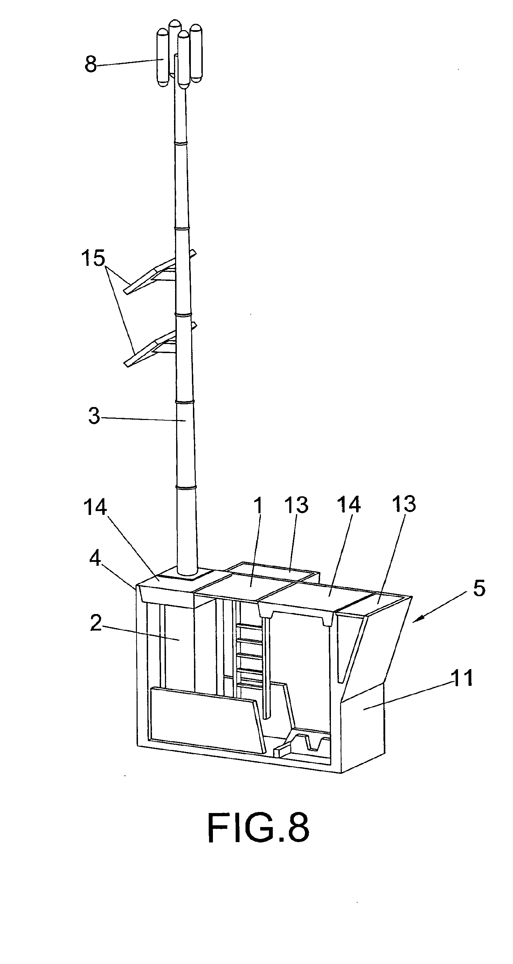

Figure 8.- Shows a vertical cross-section view of the underground building (5) with horizontal ventilation by means of boxes (13) according to an alternative embodiment of the invention, which illustrates how the pole (3) for a telecommunications aerial (8) is supported on the body (4) of the building (5). The pole holds two solar panels (15).

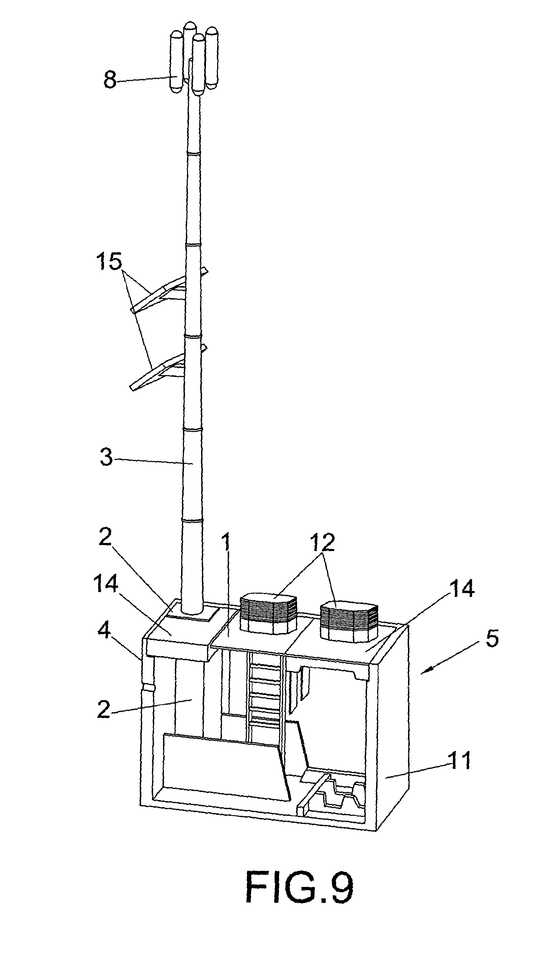

Figure 9.- Shows a vertical cross-section view of the underground building (5) with vertical ventilation by means of ventilation towers (12) according to an alternative embodiment of the invention, which illustrates how the pole (3) for a telecommunications aerial (8) is supported on the body (4) of the building (5). The pole holds two solar panels (15).

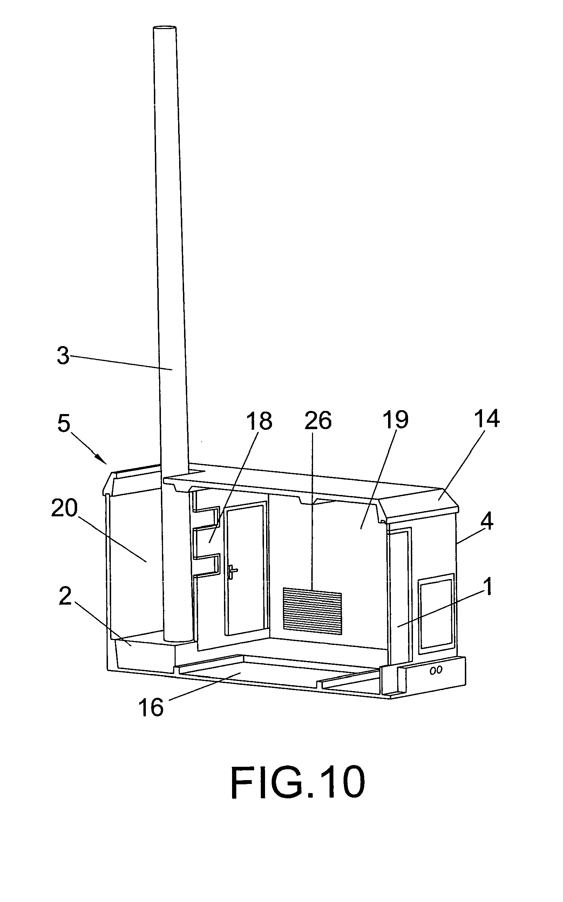

Figure 10.- Shows a vertical cross-section view of an above ground building (5) that comprises a compartment (19) for housing telecommunications equipment and an area (20) for the support pole (3) for a telecommunications aerial, with the base (2) integrated into the floor (16) of the building (5).

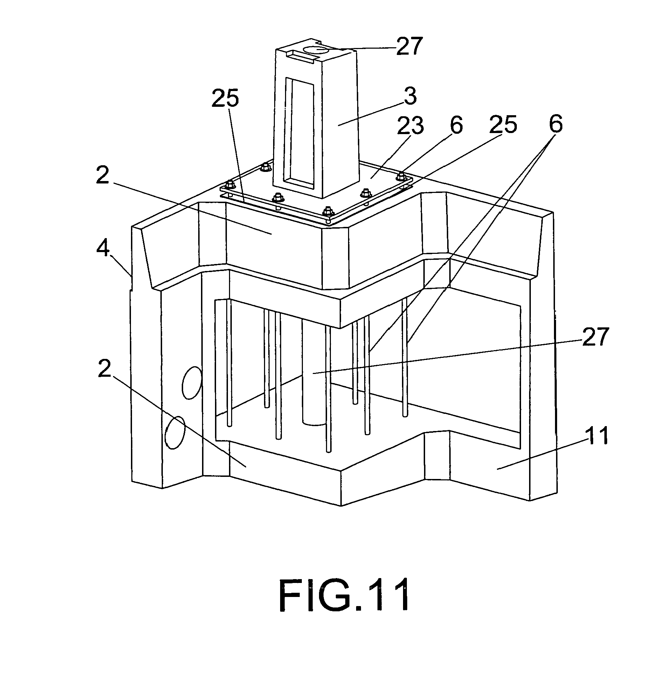

Figure 11.- Shows a detail of figure 3, which illustrates an embodiment of the manner in which the pole (3) is anchored to the plate (25) embedded in the base (2).

### PREFERRED EMBODIMENTS OF THE INVENTION

Figures 1 - 5 show a building (5) for an electrical transformer substation and/or system control centre with an underground body (4) consisting of a civil engineering, prefabricated panelling or monoblock structure made of concrete, polyester or another material, a roof (14) made of concrete, polyester or another material, and a base (2) that forms part of the underground body (4) of the building (5). This base (2), which forms part of the body (4) of the transformer substation and/or system control centre and is the same height as the building (5), starts from the floor (16) and is situated in a corner of said building (5), so that a pole (3) for the electrical cables (9) of one or more power lines (7, 17) is anchored to the upper face of the base (2), which is outside the underground body (4) and joined thereto, thus forming a complete assembly.

Thus, a building (5) is obtained, as shown in figure 1, which in addition to housing the electrical and electronic equipment corresponding to an electrical transformer substation and/or system control centre therein, also acts as the foundations for the pole (3) that supports the electrical cables (9) and is able to counteract stresses caused by compression, traction and buckling due to the weight of the materials supported by said pole (3), the traction of the conductors of the lines (7, 17) and the action of the wind thereon, thus preventing the pole (3) from falling. In turn, the fact that the pole (3) is mounted on the building (5) of the electrical transformer substation and/or system control centre makes it possible to reduce the length of the cables (21) needed to connect the substation, using a tube (22) to bring the cables (21) down the pole (3) to the ground where the building (5) is buried, it being possible for a small section of cables (21) to remain underground, or bringing the cables down directly from the pole (3) to the building (5) through the tube (27) inside the pole (3) and base (2), thus avoiding the need to dig trenches through which to pass the underground connection cables, reducing the probability of faults occurring in said section, etc., and the corresponding installation costs.

It is possible to anchor the pole (3) for supporting electrical cables (9) to the base (2) by means of bolts (6) embedded in the base (2), which consist of a cylindrical iron piece secured by a nut at the end that protrudes out of the base (2), so that said nuts press the foot (23) of the pole (3) against the base (2) as shown in figure 4, either fitting the pole (3) into the opening (24) in the base (2) as shown in figure 5 or anchoring the pole to a plate (25) embedded in the base (2), which ensures a flat contact surface, as shown in figure 11.

Figures 1 - 5 show the different configurations of the ventilation circuit for cooling the transformer electrical substation and/or system control centre. It is therefore possible to have a vertical ventilation system wherein there are one or more towers (12) for letting air in / out, which may be situated above the access door (1) or on the roof (14), as shown in figure 2. Likewise, as shown in figures 1 and 3, it is possible to have a horizontal ventilation system, that is, there may be one or more horizontal boxes (13) situated on one or more side or front faces of the building (5) or on the roof (14) thereof, which are positioned at ground level to let air in / out. The ventilation of the building (5) may further be mixed, using one or more towers (12) and one or more boxes (13) at the same time to let air in / out.

Figures 6 and 7 show two variations of the underground building (5) for housing electrical and electronic equipment, consisting of an electrical transformer substation and system control centre, which has a base (2) that forms part of the body (4) of the building (5), for fastening a pole (3) that serves to support a wind-driven generator (10) and photovoltaic panels (15), using boxes (13) for horizontal ventilation as shown in figure 6 or towers (12) for vertical ventilation as shown in figure 7.

Figures 8 and 9 show another two variations of the underground building (5) for housing telecommunications equipment, consisting of a telecommunications base station, which has a base (2) that forms part of the body (4) of the building (5), for fastening a pole (3) that serves to support a telecommunications aerial (8) and photovoltaic panels (15), using boxes (13) for horizontal ventilation as shown in figure 8 or towers (12) for vertical ventilation as shown in figure 9.

Finally, figure 10 shows an alternative embodiment of an above ground building (5) for housing telecommunications equipment, consisting of a telecommunications base station, which has a base (2) that forms part of the body (4) of the building (5) for a pole (3) that serves to support a telecommunications aerial and radio aerials, said building (5) having a compartment (19) to house telecommunications equipment separated by a wall (18) from the area (20) where the pole (3) is situated.

The numerical references used in this text represent the following parts:
- 1.-: Access door
- 2.-: Base
- 3.-: Pole
- 4.-: Body of the building

- 5.-: Building
- 6.-: Bolts
- 7.-: Overhead line
- 8.-: Telecommunications aerial
- 9.-: Electrical cable support tower
- 10.-: Wind-driven generator
- 11.-: Wall of the building
- 12.-: Ventilation tower
- 13.-: Ventilation box
- 14.-: Roof or ceiling of the building
- 15.-: Photovoltaic panel
- 16.-: Floor of the building
- 17.-: Overhead line
- 18.-: Partition or inner wall of the building
- 19.-: Equipment compartment
- 20.-: Pole enclosure
- 21.-: Connection cables
- 22.-: Tube for passing the connection cables
- 23.-: Foot of the pole
- 24.-: Opening in the base
- 25.-: Plate embedded in the base that ensures a flat contact surface
- 26.-: Ventilation grille
- 27.-: Tube inside the pole and base for passing the connection cables

In this text, the word "comprises" and variations thereof (such as "comprising", etc.) should not be taken as being exclusive, that is, they do not exclude the possibility that the item described might include other elements, steps, etc.

Furthermore, the invention is not limited to the specific embodiments described above, but also covers, for example, variations that might be made by the person averagely skilled in the art (for example, as regards the choice of materials, dimensions, components, configuration, etc.), within the bounds of what can be inferred from the claims.

## Claims

1. Building that acts as base for a pole, consisting of a body (4) with a roof (14), the building comprising a plurality of equipment housed therein, **characterised in that** said building (5) comprises at least one base (2), so that said base (2) serves to support said at least one pole (3).

2. Building according to claim 1, wherein the base (2) forms part of the body (4).

3. Building according to any of claims 1 and 2, wherein the body (4) is configured as a monoblock module.

4. Building according to any of claims 1, 2 and 3, wherein the building (5) is underground.

5. Building according to any of claims 1, 2 and 3, wherein the building (5) is semi-underground.

6. Building according to any of claims 1, 2 and 3, wherein the building (5) is above ground.

7. Building according to any of the previous claims, wherein the base (2) is comprised in at least one wall (11), a floor (16) and/or the roof (14) of the building (5).

8. Building according to any of the previous claims, which further comprises said at least one pole (3), joined to the body (4), said pole consisting of a turret (9) for supporting the electric cables of overhead lines (7, 17).

9. Building according to any of claims 1-7, which further comprises said at least one pole (3), joined to the body (4), said pole consisting of a support for a wind-driven generator (10).

10. Building according to any of the previous claims, the building comprising said at least one pole, with the cables (21) being connected directly from said at least one pole (3) to the building (5), through a tube (22) outside the pole (3).

11. Building according to any of claims 1-9, the building comprising said at least one pole (3), with the cables (21) being connected directly from said at least one pole (3) to the building (5), through a tube (22) inside the pole (3) and base (2).

12. Building according to either of claims 8 and 9, the building (5) consisting of an electrical transformer substation and/or system control centre, so that the body (4) houses electrical and electronic equipment therein.

13. Building according to any of claims 1-7, the building further comprising said at least one pole (3), said pole consisting of a support for a telecommunications and/or radio aerial (8).

14. Building according to claim 13, the building (5) consisting of a telecommunications centre, so that the body (4) houses telecommunications equipment therein.

15. Building according to any of the previous claims, the pole (3) having a plurality of photovoltaic panels (15) for supplying the equipment installed inside the body (4).

16. Building according to any of the previous claims, the building (5) comprising an inner wall (18) that creates a partition between a compartment (19) for housing equipment and an area (20) for housing said at least one pole (3).

17. Building according to any of the previous claims, comprising at least one anchoring system of the pole to the base, said anchoring system comprising:
- a plurality of bolts (6);
- a plurality of angled elements embedded in the base(2);
- an opening (24) in the base (2) into which to fit the pole (3); or
- a plate (25) embedded in the base (2).

18. Building according to any of the previous claims, the building (5) having at least one ventilation tower (12) and/or at least one ventilation box (13) and/or at least one ventilation grille (26).

19. Building according to any of the previous claims, the building (5) having an access door (1).
